# FASCICULE DE BREVET EUROPEEN

(11) **EP 1 000 255 B1**
(45) Date de publication et mention de la délivrance du brevet: **02.05.2002**
(21) Numéro de dépôt: 98941568.2
(22) Date de dépôt: 07.08.1998
(51) Int. Cl.: F16B 45/00

(54) **CROCHET A HAUTE RESISTANCE, NOTAMMENT POUR CABLE ELASTIQUE**
HOCHFESTER HAKEN, INSBESONDERE FÜR EIN ELASTISCHES KABEL
HIGH STRENGTH HOOK, IN PARTICULAR FOR ELASTIC CABLE

(30) Priorité: 08.08.1997 FR 9710210
(43) Date de publication de la demande: 17.05.2000
(73) Titulaire: JOUBERT PRODUCTION, 63600 Ambert (FR)
(72) Inventeur: JOUBERT, Xavier, F-63600 Ambert (FR); JOUBERT, Thierry, F-63600 Ambert (FR)
(74) Mandataire: Vuillermoz, Bruno
(86) Numéro de dépôt international: FR9801769
(87) Numéro de publication internationale: WO9908010

(56) Documents cités:
- EP-A- 0 493 252
- FR-A- 2 059 879
- FR-A- 2 131 129
- FR-A- 2 455 693
- FR-A- 2 552 185
- GB-A- 1 369 201

## Description

La présente invention concerne un crochet du type comportant à une extrémité un bloc de préhension en matériau de synthèse conformé pour faciliter la prise en main du crochet et traversé par un passage destiné à l'introduction et à la retenue dans le bloc d'un câble auquel le crochet doit être fixé.

Un tel crochet est décrit par exemple dans le publication US 5 317 788.

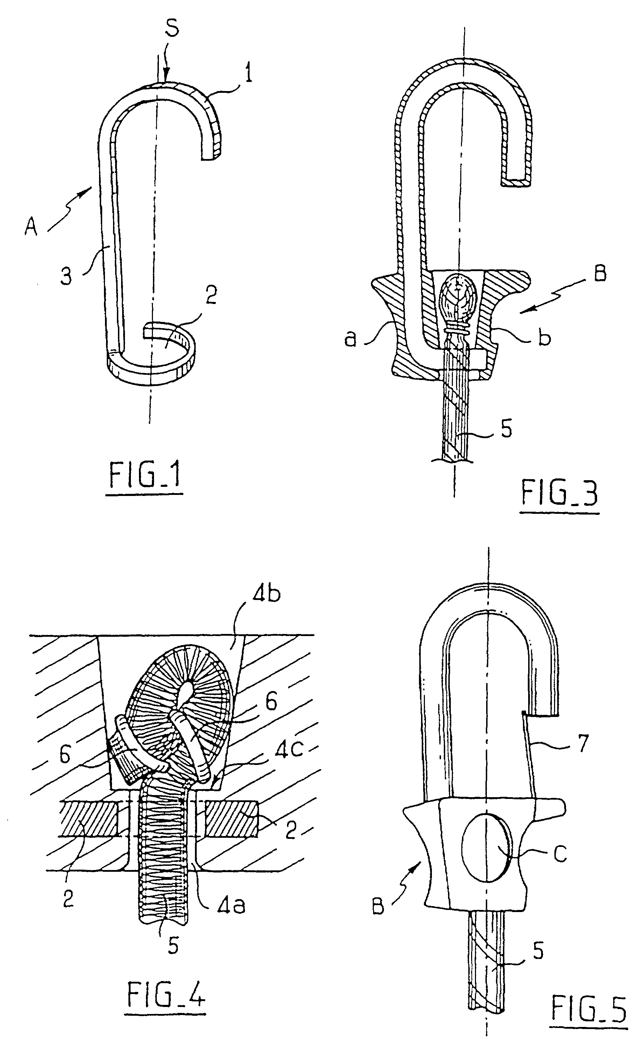

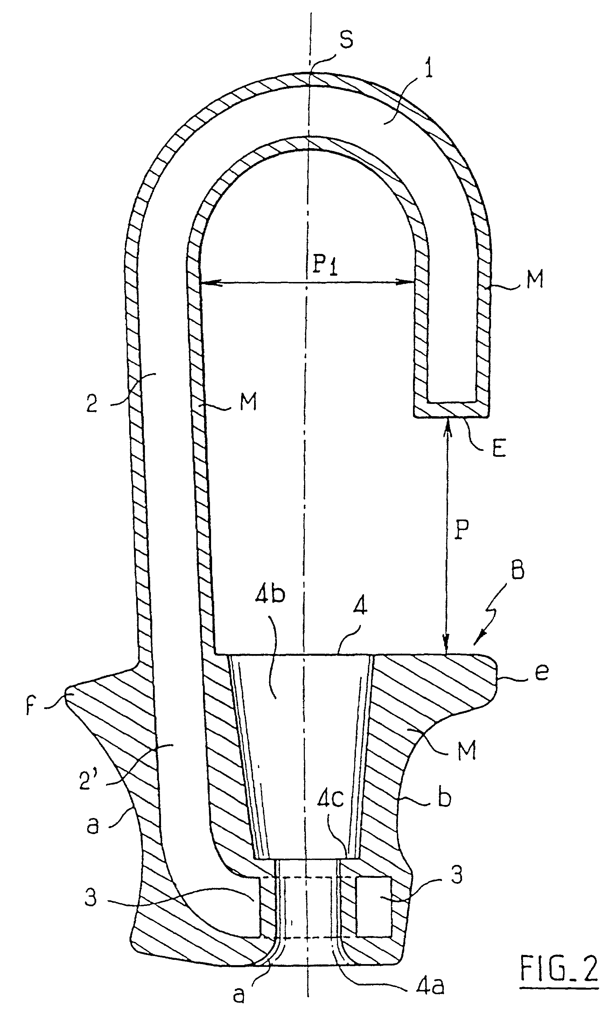

Pour retenir le câble dans le crochet, lorsque le câble est sollicité par une traction qui tendrait à l'extraire du crochet, le passage présente un rétrécissement qui détermine une butée pour arrêter l'extrémité du câble lorsque cette extrémité a été élargie après avoir traversé le passage. Dans la réalisation décrite dans la publication sus-nommée, l'élargissement de l'extrémité du câble a été obtenu par repli de l'extrémité sur elle-même et sertissage dans un anneau métallique et le passage du bloc a été conçu pour loger l'extrémité élargie du câble lorsque le câble est tiré dans le direction qui tendrait à l'extraire du crochet, en sorte que l'extrémité élargie vienne porter contre la butée qui l'arrête (figs. 4 et 5).

Dans le cas des tractions très fortes, cette retenue peut s'avérer insuffisante.

Un but de la présente invention est de perfectionner ce dispositif de retenue.

On y parvient, selon la présente invention en noyant dans le bloc autour dudit passage un insert métallique annulaire, à proximité du rétrécissement.

Dans une réalisation préférée, cet insert constitue une extrémité d'une armature qui court dans toute l'étendue du crochet, ce qui améliore encore la résistance du crochet.

On décrira ci-après un exemple de réalisation d'un tel crochet en référence aux figures du dessin joint sur lequel :
- la figure 1 est une vue en perspective schématique de l'armature du crochet ;
- la figure 2 est une coupe du crochet dans l'axe du passage du bloc de préhension ;
- la figure 3 est une coupe longitudinale du crochet fixé à un câble ;
- la figure 4 est une vue en perspective schématique de l'extrémité sertie du câble retenue dans le passage du bloc de préhension ;
- la figure 5 est une perspective du crochet muni d'un linguet de sécurité ;
- la figure 6 est une vue du crochet dans un plan perpendiculaire à celui de la courbe du crochet, et
- les figures 7 et 8 sont relatives à des variantes de détails.

Les figures sont chaque fois à l'échelle qui convient aux explications correspondantes.

L'armature (A) du crochet est constituée (fig. 1) d'un fil rigide métallique (A) dont une extrémité (1) a été courbée en forme de J inversé et dont l'autre extrémité a été pliée pour se situer dans un plan perpendiculaire au plan du J et recourbée et y former un anneau ouvert (3) ou fermé.

De préférence, le crochet est en acier méplat à bord arrondi ou non, la formation du crochet se faisant sur champ de façon à avoir la meilleure résistance possible.

De préférence, l'anneau (3) est sensiblement axé sur le sommet (S) de la courbe du J et la hampe (2) du J est légèrement oblique vers l'extérieur à partir de l'anneau.

Ce fil est placé dans une cavité d'un moule d'injection pour être enrobé d'une résine de synthèse ou autre matériau approprié. Pour cette opération, on utilise par exemple du polyéthylène ou du polypropylène pour des pièces classiques, un polyamide ou un polyamide renforcé pour des crochets devant résister à l'abrasion.

La cavité est conformée pour que la matière injectée (M)(fig. 2) épouse la forme de la partie (1) en J du fil et de la hampe (2), et, par contre constitue autour de la base (2') de la hampe (2) et de l'anneau (3) du fil un bloc (B) beaucoup plus épais muni d'un passage traversant (4) axé sur le sommet de la courbe du J.

L'épaisseur hors-tout du bloc dans un plan perpendiculaire à celui du J du crochet est par exemple 3 à 5 fois celle de la hampe enrobée et elle est de 4 à 8 fois dans un plan parallèle à celui du J, compte tenu des saillies que présente le bloc.

Le passage (4) forme un conduit d'entrée (4a), par exemple cylindrique pour l'introduction dans le crochet de l'extrémité d'un câble (5), de préférence élastique, et un conduit de sortie (4b), par exemple tronconique, débouchant en face de la courbe du J, la jonction des deux conduits formant un épaulement (4c) qui constitue une butée..

La cavité de moulage est conçue en sorte que l'anneau (3) du fil métallique soit totalement noyé dans la matière injectée (M) et situé autour du conduit d'entrée (4a) à proximité de l'épaulement (4c).

De façon en soi connue, l'extrémité du câble (5) a été repliée sur elle-même et sertie par un clip métallique (6), par exemple un anneau d'acier qui a été écrasé après sertissage. Une traction sur le câble met cette extrémité sertie en appui sur la jonction (4c) des deux conduit renforcée par l'anneau (3) du fil (1) (figs. 3 et 4).

L'invention n'est pas limitée à l'utilisation d'un clip pour équiper l'extrémité du câble. On peut lui substituer tout moyen susceptible de maintenir l'extrémité élargie du câble.

Le bord d'entrée (9) du conduit d'entrée (4a) est arrondi pour éviter l'existence d'une arête vive qui pourrait blesser le câble.

Cet avantage n'existe pas sur les crochets dont la matière de synthèse est directement moulée sur le câble car dans ce dernier cas :
- la matière plastique vient s'incruster dans le câble créant des aspérités susceptibles de le blesser ;
- le contact de la matière en fusion et du revêtement synthétique du câble peuvent dégrader celui-ci.

La cavité de moulage est conçue pour que le bloc de préhension (B) ait toute forme ergonomique souhaitée, présentant par exemple des creusements latéraux (a, b, c, d) permettant de pincer le crochet entre les doigts et des bossages d'appui-doigt (e, f). Les creusements latéraux peuvent être réalisés dans des parties de bloc qui se trouvent en saillie sur le bloc, comme le creusement (a) situé du côté de la hampe (2).

Le bossage (e) qui se trouve en face de l'extrémité (E) du crochet sert de guidage lors de l'introduction du crochet sur une barre ou sur toute pièce d'accrochage.

Le bloc moulé (B) peut comporter un linguet pivotant de sécurité (7) susceptible de venir en appui contre le bout libre (E) du crochet, du côté intérieur du crochet (fig. 5), de façon en soi connue.

Un bouchon peut obstruer l'entrée du passage (4a) autour du câble complétant ainsi l'esthétique du crochet.

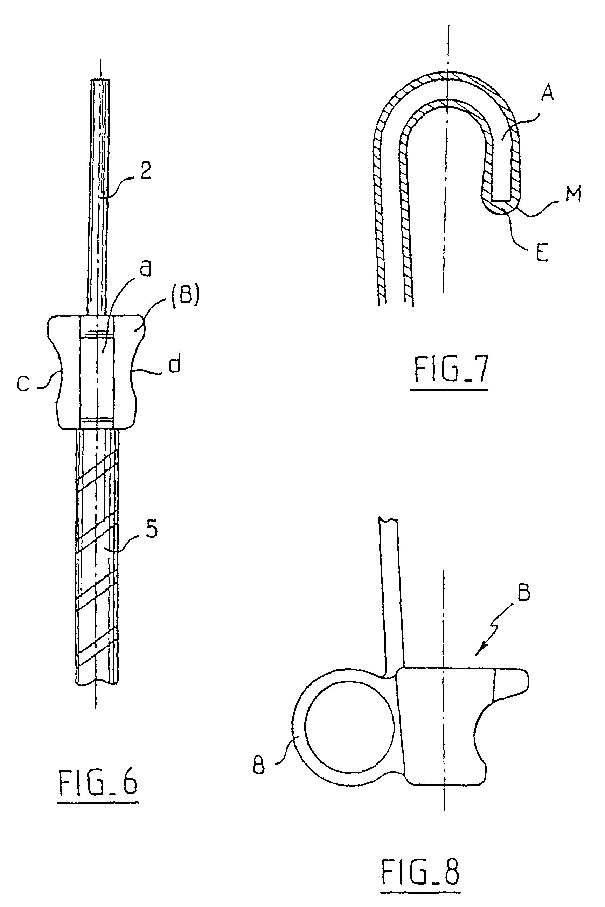

Le bout libre (E) du crochet peut recevoir une protection très efficace grâce à une surcharge de matière (fig. 7).

Un anneau de préhension (8) permet dans certains cas une utilisation plus aisée du crochet (fig. 8).

La résistance du crochet est telle qu'elle autorise des passages de barre (P) et (P₁) important, alors que sur le crochet standard, ces passages sont obligatoirement limités afin de ne pas affaiblir la résistance du crochet à s'ouvrir.

Un autre avantage non négligeable de l'invention est la possibilité d'une vérification régulière de la qualité du sertissage et celle de l'élastique, contrairement aux crochets directement moulés sur le câble.

On notera aussi que la matière d'enrobage ne présente aucune perforation alors que dans certaines fabrications antérieures, l'emplacement des pièces de maintien de l'âme métallique dans le moule laisse apparaître cette âme par endroits dans le produit surmoulé, ce qui impose une protection supplémentaire à ces endroits pour éviter l'oxydation et le gonflement de l'âme, avec éventuellement destruction de l'enrobage.

L'invention n'est pas limitée à la réalisation qui est décrite mais s'étend à toutes les variantes que l'on peut obtenir en remplaçant les moyens décrits par des moyens fonctionnellement équivalents.

## Revendications

1. Crochet du type comportant un bloc d'extrémité (B) en matériau de synthèse conformé pour faciliter la prise en main du crochet et traversé par un passage (4) destiné au coulissement de l'extrémité d'un câble (5) auquel le crochet doit être fixé, ledit passage présentant un rétrécissement qui détermine une butée (4c) pour arrêter l'extrémité du câble qui a été élargie après avoir traversé le passage, lorsque le câble est sollicité par une traction qui tendrait à l'extraire du passage, **caractérisé en ce qu'**un insert métallique annulaire (3) est noyé dans le bloc autour dudit passage à proximité de ladite butée d'arrêt (4c).

2. Crochet selon la revendication 1, et qui comporte une armature métallique constituée par un fil rigide (A) dont une extrémité (1) est courbée en forme de J inversé (fig. 1) et dont l'autre extrémité a été pliée pour se situer dans un plan perpendiculaire au plan du J et recourbée en anneau pour constituer ledit insert (3).

3. Crochet selon la revendication 2, dont ledit insert annulaire (3) est axé sur le sommet (S) de la courbe du J.

4. Crochet selon la revendication 2 ou 3,dont le fil d'armature (A) est méplat.

5. Crochet selon l'une des revendications 1 à 4, dont ledit passage (4) forme un conduit d'entrée (4a) pour l'introduction dans le crochet de l'extrémité non élargie du câble (5) et un conduit de sortie (4b) plus large que le conduit d'entrée, apte à loger l'extrémité élargie du câble et débouchant en face de la courbe du J, ledit passage formant à la jonction des deux conduits un épaulement (4c) qui constitue ladite butée.

6. Crochet selon la revendication 5, dont le bord d'entrée du conduit d'entrée (4a) est arrondi pour éviter l'existence d'une arête vive qui pourrait blesser le câble.

7. Crochet selon la revendication 5 ou 6, dont l'insert annulaire (3) encoure ledit conduit d'entrée (4a), à proximité de sa jonction (4c) avec le conduit de sortie (4b).

8. Crochet selon l'une des revendications 1 à 7, dont le bloc présente des creusements latéraux (a-d) et des ergots (e ; f).

9. Crochet selon l'une des revendications 1 à 8, dont le bloc présente un linguet de sécurité basculant (7) fixé audit bloc et apte à porter contre l'extrémité libre (E) du crochet du côté intérieur au crochet.

10. Crochet selon l'une des revendications 1 à 9, et dont l'extrémité libre (E) est enrobée d'une surcharge de la matière injectée.

11. Crochet selon l'une des revendications 1 à 10 , fixé à un câble (5) introduit dans ledit passage et dont l'extrémité qui a traversé ledit passage a été repliée et sertie par un clip, ledit passage étant conformé pour loger l'extrémité repliée et sertie du câble lorsque le câble subit une traction tendant à l'extraire du passage, jusqu'à butée de l'extrémité repliée et sertie contre la butée formée dans ledit passage.

## Claims

1. A hook of the type comprising an end block (B) of synthetic material shaped to make the hook easier to hold in the hand and having a passage (4) passing therethrough for slidably receiving the end of a cable (5) to which the hook is to be fixed, said passage having a taper which defines an abutment (4c) for stopping the end of the cable, which is enlarged after it has passed through the passage, whenever traction is exerted on the cable tending to extract it from the passage, the hook being **characterized in that** an annular metal insert (3) is embedded in the block around said passage in the vicinity of said stop abutment (4c).

2. A hook according to claim 1, including metal reinforcement constituted by a rigid wire (A) having one end (1) curved into an upside-down J-shape (Figure 1) and having its other end bent so as to be situated in a plane perpendicular to the plane of the J-shape and curved into a ring so as to constitute said insert (3).

3. A hook according to claim 2, in which said annular insert (3) has an axis passing through the top (S) of the curve of the J-shape.

4. A hook according to claim 2 or 3, in which the reinforcement wire (A) is a flat.

5. A hook according to any one of claims 1 to 4, in which said passage (4) forms an inlet duct (4a) through which the non-enlarged end of the cable (5) is inserted into the hook, and an outlet duct (4b) larger than the inlet duct, and suitable for receiving the enlarged end of the cable and opening out so as to face the curve of the J-shape, said passage forming a shoulder (4c) at the junction between the two ducts, thereby constituting said abutment.

6. A hook according to claim 5, in which the inlet edge of the inlet duct (4a) is rounded so as to avoid leaving any sharp edge which could injure the cable.

7. A hook according to claim 5 or 6, in which the annular insert (3) surrounds said inlet duct (4a) in the vicinity of its junction (4c) with the outlet duct (4b).

8. A hook according to any one of claims 1 to 7, in which the block has lateral recesses (a-d) and projections (e, f).

9. A hook according to any one of claims 1 to 8, in which the block presents a tilting safety tongue (7) fixed to said block and suitable for bearing against the free end (E) of the hook on the inside of the hook.

10. A hook according to any one of claims 1 to 9, in which the free end (E) is coated with extra injected material.

11. A hook according to any one of claims 1 to 10, fixed to a cable (5) inserted in said passage and whose end that passes through said passage is folded back onto itself and crimped by means of a clip, said passage being shaped so as to receive the folded-back and crimped end of the cable when the cable is subjected to traction tending to extract it from the passage, until the folded-back and crimped end comes into abutment against the abutment formed in said passage.

## Patentansprüche

1. Haken mit einem Endblock (B) aus synthetischem Material, der so gestaltet ist, daß er das Greifen des Hakens mit der Hand erleichtert und von einem Durchgang (4) zum verschieben des Endes eines Kabels (5) durchquert ist, an dem der Haken befestigt sein soll, wobei der Durchgang eine Verengung aufweist, die einen Anschlag (4c) bildet, um das Ende des Kabels, das nach der Durchquerung des Durchgangs verbreitert worden ist, zu arretieren, wenn das Kabel mit einem Zug beaufschlagt wird, der darauf abzielen würde, das Kabel aus dem Durchgang hinaus zu ziehen, **dadurch gekennzeichnet, daß** ein metallischer ringförmiger Einsatz (3) in den Block um den Durchgang in der Nähe des Arretieranschlags (4c) eingelassen ist.

2. Haken nach Anspruch 1, welcher eine metallische Bewehrung beinhaltet, die durch einen starren Draht (A) gebildet wird, dessen eines Ende (1) in Form eines invertierten J's (Fig. 1) gekrümmt ist und dessen anderes Ende derart abgebogen ist, so daß es sich in einer Ebene senkrecht zur Ebene des J befindet und ringförmig gekrümmt ist, um den Einsatz (3) zu bilden.

3. Haken nach Anspruch 2, bei dem der ringförmige Einsatz (3) mit seiner Achse auf die Kuppe (S) der Kurve des J ausgerichtet ist.

4. Haken nach Anspruch 2 oder 3, bei der dem der Bewehrungsdraht (A) abgeflacht ist.

5. Haken nach einem der Ansprüche 1 bis 4, bei dem der Durchgang (4) einen Einführungskanal (4a) zum Einführen des nicht verbreiterten Endes des Kabels (5) in den Haken und einen Ausgangskanal (4b) bildet, der breiter als der Einführungskanal ist und dazu ausgelegt ist, das verbreiterte Ende des Kabels aufzunehmen und gegenüber der Krümmung des J's mündet, wobei der Durchgang am Übergang der beiden Kanäle einen Vorsprung (4c) bildet, der den Anschlag darstellt.

6. Haken nach Anspruch 5, bei dem der Rand des Eingangs des Einführungskanals (4a) abgerundet ist, um die Möglichkeit einer heftigen Arretierung zu verhindern, die das Kabel beschädigen könnte.

7. Haken nach Anspruch 5 oder 6, bei dem der ringförmige Einsatz (3) den Einführungskanal (4a) in der Nähe des Übergangs (4c) zum Ausgangskanal (4b) umgibt.

8. Haken nach einem der Ansprüche 1 bis 4, bei dem der Block vorsprünge (e; f) und laterale Vertiefungen (a-d) aufweist.

9. Haken nach einem der Ansprüche 1 bis 8, bei dem der Block eine klappbare Hakensicherung (7) aufweist, die am Block befestigt ist und dazu ausgelegt ist, gegen das freie Ende (E) des Hakens auf der Innenseite des Hakens aufzuliegen.

10. Haken nach einem der Ansprüche 1 bis 9, dessen freies Ende (E) mit einem Auftrag der Gußmasse umhüllt ist.

11. Haken nach einem der Ansprüche 1 bis 10, welcher an einem Kabel (5) befestigt ist, das in den Durchgang eingeführt und dessen Ende, nachdem es den Durchgang durchquert hat, umgebogen und durch eine Klemme gequetscht worden ist, wobei der Durchgang dazu ausgelegt ist, das umgebogene und gequetschte Ende des Kabels aufzunehmen, wenn das Kabel einem Zug ausgesetzt ist, welcher darauf abzielt, es aus dem Durchgang hinaus zu ziehen, bis das umgebogene und gequetschte Ende gegen den im Durchgang gebildeten Anschlag anschlägt.
